# EUROPÄISCHE PATENTSCHRIFT

(11) **EP 1 062 132 B1**
(45) Veröffentlichungstag und Bekanntmachung des Hinweises auf die Patenterteilung: **12.06.2002**
(21) Anmeldenummer: 99917764.5
(22) Anmeldetag: 03.03.1999
(51) Int. Cl.: B60R 21/32

(54) **INSASSENSCHUTZSYSTEM FÜR EIN KRAFTFAHRZEUG UND VERFAHREN ZUM STEUERN DER AUSLÖSUNG DES INSASSENSCHUTZSYSTEMS MIT FEHLERÜBERPRÜFUNGSFUNKTION DES UNFALLSENSORS**
OCCUPANT PROTECTION SYSTEM FOR A MOTOR VEHICLE AND METHOD FOR CONTROLLING THE DEPLOYMENT OF SAID OCCUPANT PROTECTION SYSTEM WITH ERROR CONTROL OF THE ACCIDENT DETECTOR
SYSTEME DE PROTECTION DES OCCUPANTS D'UN VEHICULE ET PROCEDE POUR COMMANDER LE DECLENCHEMENT DUDIT SYSTEME AVEC FONCTION DE CONTROLE DE DEFAILLANCE DU DETECTEUR D'ACCIDENT

(30) Priorität: 13.03.1998 DE 19811070
(43) Veröffentlichungstag der Anmeldung: 27.12.2000
(73) Patentinhaber: SIEMENS AKTIENGESELLSCHAFT, 80333 München (DE)
(72) Erfinder: SCHMID, Gerhard, D-93049 Regensburg (DE); MADER, Gerhard, D-93107 Thalmassing (DE); ZECHMAIR, Derrick, D-86529 Schrobenhausen (DE)
(86) Internationale Anmeldenummer: DE9900560
(87) Internationale Veröffentlichungsnummer: WO9947388

(56) Entgegenhaltungen:
- WO-A-97/32757
- US-A- 5 409 258
- US-A- 5 433 101
- US-A- 5 646 454
- US-A- 5 726 887

## Beschreibung

Die Erfindung betrifft ein Insassenschutzsystem für ein Kraftfahrzeug, das mindestens einen Unfallsensor und. eine Steuereinrichtung umfaßt, die die Auslösung des Insassenschutzsystems in Abhängigkeit vom Sensorausgangssignal steuert. Der Unfallsensor erfaßt einen einen Unfall charakterisierenden Parameter, insbesondere eine Kraftfahrzeugbeschleunigung, Kraftfahrzeugneigung und/oder eine Rollbewegung. Wenn vorgegebene Grenzwerte erreicht werden, steuert die Steuereinrichtung die Auslösung des Insassenschutzsystems. Das Insassenschutzsystem kann als Airbagsystem, Gurtstraffersystem, Überrollbügel-Auslösesystem oder in sonstiger Weise ausgebildet sein.

Wenn das vom Unfallsensor erzeugte Ausgangssignal jedoch fehlerhaft sein sollte, besteht die Gefahr, daß es zu einer unnötigen, sehr unerwünschten Auslösung des Insassenschutzsystems kommt, oder daß eine eigentlich notwendige Auslösung unterbleibt.

Aus der DE 43 44 284 A1 ist eine beispielsweise für den Einsatz in Fahrzeugen geeignete Halbleiter-Beschleunigungsmeßvorrichtung mit einem Beschleunigungssensor und einer Diagnoseschaltung bekannt, die überprüft, ob das vom Beschleunigungssensor erzeugte, durch eine Verstärkerschaltung verstärkte Ausgangssignal abnormal ist oder nicht, und die an dem Meßausleger des Sensors angebracht ist.

Aus der DE 37 06 765 A1 ist ein Aufprallsensor für ein Kraftfahrzeug bekannt, der mit einer Prüfschaltung verbunden ist und einen Beschleunigungsfühier aufweist. Zum Funktionstest wird der Beschleunigungsfühler durch einen in dem Sensorgehäuse angeordneten elektroakustischen Wandler beschallt und es werden die als Reaktion vom Beschleunigungsfühler erzeugten elektrischen Signale in einer Auswerte- und Auslöseschaltung überprüft. Die Überprüfung kann vor Beginn einer Fahrt und auch in regelmäßigen Zeitabständen während der Fahrt erfolgen.

In der DE 44 24 020 A1 ist ein Prüfverfahren für ein Insassenschutzsystem beschrieben, bei dem an die Ausgangsleitung des Kollisionssensors Prüfimpulse angelegt werden, die durch nachgeschaltete Signalaufbereitungs- und Steuerkomponenten erfaßt und zur Funktionsüberprüfung ausgewertet werden.

Aus der DE 43 16 263 A1 ist ein Verfahren zum Diagnostizieren der Funktionsfähigkeit eines Beschleunigungssensors bekannt, bei dem eine Diagnosespannung an eine feststehende Elektrode des Beschleunigungssensors angelegt und die hieraus resultierende Auslenkung einer beweglichen Elektrode erfaßt und ausgewertet wird.

Der Erfindung liegt die Aufgabe zugrunde, ein Insassenschutzsystem für ein Kraftfahrzeug derart auszugestalten, daß die Gefahr von Auslösefehlern bei der Insassenschutzsystem-Steuerung verringert ist.

Diese Aufgabe wird mit den im Patentanspruch 1 genannten Merkmalen gelöst.

Mit der Erfindung wird weiterhin ein Verfahren zum Steuern der Auslösung eines Insassenschutzsystems gemäß dem Patentanspruch 8 geschaffen.

Vorteilhafte Ausgestaltungen der Erfindung sind in den Unteransprüchen angegeben.

Der Unfallsensor ist mit einer Fehlerüberprüfungsfunktion zur Erkennung interner Fehler ausgestattet und gibt bei Fehlererkennung dauerhaft ein Meldesignal an die übergeordnete Steuereinrichtung ab. Die Steuereinrichtung kann somit jederzeit erkennen, daß das vom Unfallsensor erzeugte, den überwachten Parameter (zum Beispiel die Beschleunigung) repräsentierende Sensor-Ausgangssignal fehlerhaft sein kann. Die Steuereinrichtung kann dann geeignete Schutzmaßnahmen einleiten, zum Beispiel einen akustischen und/oder optischen Warnhinweis für den Fahrer erzeugen und das Sensor-Ausgangssignal nicht länger auswerten. Der Unfallsensor ist mit einem speziell für die Ausgabe des Meldesignals reservierten zusätzlichen Meldesignal-Ausgangsanschluß versehen, der über eine eigene Leitung mit einem Anschluß der Steuereinrichtung verbunden ist. Das Meldesignal kann somit auf einer eigenen Leitung zur Steuereinrichtung übertragen und daher unabhängig von, und zusätzlich zu, dem eigentlichen Sensor-Ausgangssignal abgefragt werden. Die Abfragefrequenz ist hierbei vorzugsweise kleiner als der Abfragetakt des Sensor-Ausgangssignals, so daß die durch die Meldesignal-Abfragung hervorgerufene zusätzliche Belastung der Steuereinrichtung gering bleibt. Der Unfallsensor kann auch einen Testanschluß aufweisen, über den in einer Startphase ein Testsignal für einen Funktionstest aktiv von der Steuereinrichtung zuführbar ist.

Der Unfallsensor speichert auch ein nur kurzzeitig auftretendes Meldesignal dauerhaft. Diese Information kann bei einer nachfolgenden Wartung und/oder Diagnose des Unfallsensors hilfreich sein und/oder eine vorgezogene Wartung/Diagnose des Unfallsensors erzwingen.

Die Fehlerüberprüfungsfunktion kann zum Beispiel in einer Fehlererkennungsüberprüfung von aus einem Sensor-Speicher ausgelesenen Sensorbetriebs-Steuerdaten bestehen. Die Sensorbetriebs-Steuerdaten können zum Beispiel mit einem Paritätsbit versehen sein. Der Sensor führt in diesem Fall beim Auslesen der Sensorbetriebs-Steuerdaten eine Paritätsüberprüfung durch und erzeugt das Meldesignal, wenn die Paritätsüberprüfung einen Datenfehler ergeben sollte. Die Fehlerüberprüfungsfunktion kann aber auch dazu ausgelegt sein, interne mechanische und/oder elektrische Defekte des Sensors zu überprüfen.

Eine noch weiter verbesserte Sicherheit gegenüber durch Sensorfehler bedingten, unerwünschten Auslösungen läßt sich dadurch erreichen, daß vor einer tatsächlichen Auslösung des Insassenschutzsystems (aufgrund eines einen Unfall signalisierenden Sensor-Ausgangssignals) das Sensor-Meldesignal nochmals aktuell abgefragt wird. Lediglich dann, wenn der Meldesignalzustand signalisiert, daß der Unfallsensor fehlerfrei arbeitet, wird die Auslösung des Insassenschutzsystems getriggert, andernfalls aber gesperrt.

Die Erfindung wird nachstehend anhand von Ausführungsbeispielen in größeren Einzelheiten beschrieben. Es zeigen:
- Fig. 1: eine Teildarstellung eines erfindungsgemäßen Schaltungsaufbaus,
- Fig. 2: eine Darstellung von Signalverläufen, die bei der in Fig. 1 gezeigten Schaltung auftreten, und
- Fig. 3: ein Ablaufdiagramm einer Ausführungsform des erfindungsgemäßen Verfahrens.

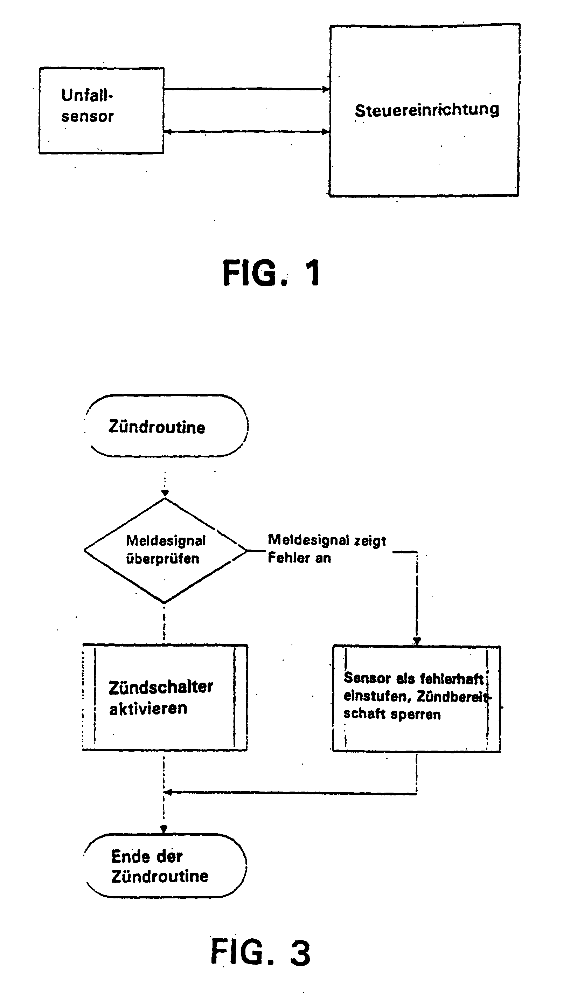

In Fig. 1 ist ein Unfallsensor 1 dargestellt, der über zwei Leitungen 2 und 3 mit einer Steuereinrichtung 4 verbunden ist. Die Steuereinrichtung 4 ist als Microcontroller ausgebildet und über nicht dargestellte Leitungen mit einer oder mehreren Zündpillen des Insassenschutzsystems verbunden. Die Steuereinrichtung 4 erhält vom Unfallsensor 1 über die Leitung 2 das Sensor-Ausgangssignal, das entweder analog die Größe des überwachten Parameters (zum Beispiel Fahrzeugbeschleunigung) repräsentiert oder in Form eines digitalen Signals mit zwei Pegeln (ein/aus) abgegeben wird. Das Sensor-Ausgangssignal liegt an einem entsprechenden Eingangsanschluß der Steuereinrichtung 4 an und wird zyklisch mit hoher Frequenz, zum Beispiel 4 kHz, abgefragt, damit ein durch den Unfallsensor 1 signalisierter (drohender oder bereits erfolgter) Unfall möglichst schnell detektiert und das Insassenschutzsystem ausgelöst werden kann.

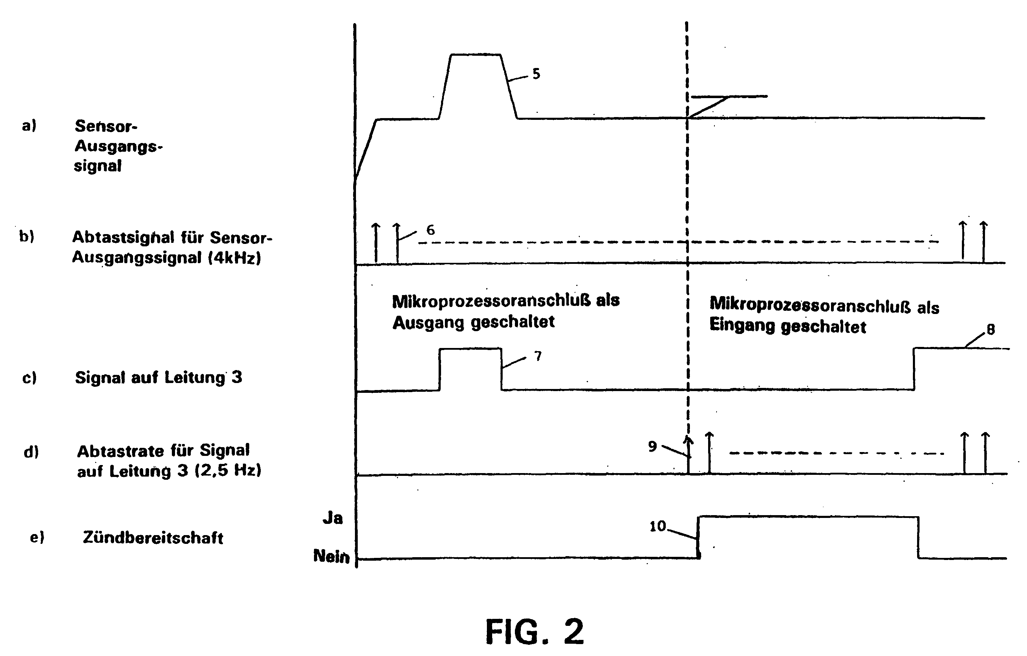

Bei dem dargestellten Ausführungsbeispiel ist der Unfallsensor 1 durch einen Beschleunigungssensor gebildet. Es ist aber auch möglich, einen (oder mehrere) andersgearteten Unfallsensor zu verwenden, beispielsweise einen Neigungsschalter, einen Rollbewegungsdetektor, einen mechanisch schaltenden Trägheitsschalter usw. Beim vorliegenden Ausführungsbeispiel ist der Unfallsensor 1 als integrierter Beschleunigungssensor mit Selbsttestfunktion ausgebildet, der direkt an die Steuereinrichtung 4 angeschlossen ist. Während einer Startphase, die zum Beispiel nach dem Starten des Kraftfahrzeugs ausgeführt wird, erzeugt die Steuereinrichtung 4 an ihrem mit der Leitung 3 verbundenen Anschluß einen Impuls 7 (siehe Fig. 2, Kurvenzug c)), der an den mit der Leitung 3 verbundenen Testanschluß (Meldesignal-Ausgangsanschluß) des Unfallsensors 1 angelegt wird. Durch dieses Spannungssignal, das bei dem gezeigten Beispiel hohen Pegel besitzt, wird der Unfallsensor 1 künstlich erregt, nämlich zum Beispiel die seismische Masse des Unfallsensors 1 ausgelenkt, so daß der Unfallsensor 1 bei korrekter Funktionsweise an seinem mit der Leitung 2 verbundenen Ausgang ein diesen Zustand anzeigendes Ausgangssignal erzeugt, das heißt den Ausgangssignalpegel umschaltet. Dieses auf der Leitung 2 abgegebene Sensor-Ausgangssignal wird von der Steuereinrichtung 4 bewertet und hierdurch die korrekte Funktion des Unfallsensors 1 überprüft.

In Fig. 2, Kurvenzug a), ist das vom Sensor bei korrekter Funktionsweise auf der Leitung 2 erzeugte Antwortsignal mit dem Bezugszeichen 5 bezeichnet. Die Startphase entspricht in Fig. 2 dem links von der vertikalen, strichliert dargestellten Linie gezeigten Zeitbereich.

Bei dem dargestellten Ausführungsbeispiel ist der Unfallsensor 1 durch einen kapazitiven Beschleunigungssensor gebildet, der als Kondensator mit zwei feststehenden Kondensatorplatten und einer beweglichen, zwischen den beiden feststehenden Kondensatorpiatten angeordneten Mittelplatte ausgestaltet ist. Durch die über die Leitung 3 beim Selbsttest zugeführte Spannung (Impuls 7) wird diese bewegliche, als seismische Masse dienende Mittelplatte des Kondensators durch elektrostatische Anziehung ausgelenkt und führt damit eine Bewegung durch, wie sie bei einer sehr starken Verzögerung des Kraftfahrzeugs aufgrund eines (drohenden) Unfalls hervorgerufen wird. Hierdurch verändern sich die internen Kapazitätswerte deutlich. Der Sensor wertet diese Kapazitätsveränderungen intern aus, beispielsweise nach Verstärkung der sehr schwachen, durch diese Kapazitätsveränderung hervorgerufenen internen Signale, und erzeugt dann auf der Leitung 2 das entsprechende analoge oder digitale Sensor-Ausgangssignal mit dem in Fig. 2a) gezeigten Verlauf (Impuls 5).

Der Ünfällsensor 1 weist je nach Bauart verschiedene interne Funktionen auf, und ist erfindungsgemäß so aufgebaut, daß er eine oder mehrere dieser internen Funktionen (in regelmäßigen oder unregelmäßigen Intervallen) selbsttätig intern überprüfen kann. Der Unfallsensor 1 enthält beispielsweise einen internen Speicher, insbesondere in Form eines EPROM, in dem Steuerdaten gespeichert sind, die den Sensorbetrieb steuern und während des Sensorbetriebs wiederholt ausgelesen werden können. Diese Steuerdaten können zum Beispiel den zur Verstärkung des internen kapazitiven Meßsignals vorgesehenen Verstärkungsfaktor repräsentieren und/oder Kalibrierungsdaten sein, die den zur korrekten internen Signalverarbeitung erforderlichen Offset-Wert oder die Verstärkung definieren. Diese Sensorbetriebs-Steuerdaten, zum Beispiel Kalibrierungsdaten, werden vorzugsweise werksseitig vor der Auslieferung des Beschleunigungssensors in den Speicher eingeschrieben, können aber auch noch später zur Anpassung an geändertes Ansprechverhalten aktualisiert werden. Erfindungsgemäß werden diese Steuerdaten zusammen mit einem Fehlererkennungskode, im einfachsten Fall einem Paritätsbit, in den Speicher eingeschrieben. Nach dem Auslesen der Steuerdaten führt der Unfallsensor 1 intern eine Fehlererkennungsüberprüfung, zum Beispiel eine Paritätsüberprüfung, durch, so daß er Datenfehler erkennen kann, die durch fehlerhaft eingespeicherte Steuerdaten und/oder beim Auslesen aufgetretene Auslesefehler bedingt sind.

Der Unfallsensor 1 ist über eine interne elektrische Schaltung, zum Beispiel einen Transistor, mit seinem an die Leitung 3 angeschlossenen Testanschluß verbunden und kann somit das Potential auf der Leitung 3 aktiv steuern. Wenn er einen internen Funktionsfehler feststellt, schaltet er (zum Beispiel durch Aktivierung des internen, an den Testanschluß angeschlossenen Transistors) das Potential auf der Leitung 3 um und generiert somit ein der Steuereinrichtung 4 zugeführtes Meldesignal (Signal 8 in Fig. 2c).

Es ist auch möglich, nicht den für den Startphasen-Test vorgesehenen Sensoranschluß zur Erzeugung des Meldesignals zu verwenden, sondern hierfür einen weiteren Sensorausgang zu benutzen, der mit einem entsprechenden Anschluß der Steuereinrichtung 4 verbunden ist.

Die im Unfallsensor 1 vorgesehene interne Fehlerüberprüfungsfunktion kann alternativ auch zur Überwachung anderer Parameter eingesetzt werden. Wenn der Unfallsensor 1 zum Beispiel mit einem internen Taktgeber ausgestattet ist, kann der Unfallsensor so ausgestaltet sein, daß er die Taktsignalfrequenz mit vorgegebenen Werten vergleicht und bei Abweichungen aus einem zulässigen Frequenzbereich heraus das Meldesignal generiert. Ferner kann der Unfallsensor beispielsweise mit einem Signalfilter versehen sein und die korrekte Filterfunktion intermittierend überprüfen. Der Unfallsensor 1 kann ferner so ausgelegt sein, daß er im Rahmen seiner Fehlerüberprüfungsfunktion interne mechanische Defekte erkennt. Im Fall eines piezoresistiven Unfallsensors kann beispielsweise das Problem auftreten, daß der beschleunigungsabhängig verbogene Silizium-Biegebalken brechen kann. Der Sensor kann im Rahmen seiner Fehlerüberprüfungsfunktion den gebrochenen Zustand des Silizium-Biegebalkens erkennen (zum Beispiel aufgrund der stark veränderten internen Signalverhältnisse oder über eine speziell zur Überprüfung des Biegebalkenzustands vorgesehene Meßstrecke), und bei Erkennung von Fehlern das Meldesignal genieren.

Die Erfindung ist selbstverständlich auch bei anders gearteten Unfallsensoren einsetzbar, beispielsweise bei piezoelektrischen Sensoren, die mit einer entsprechenden internen Fehlerüberprüfungsfunktion ausgestattet ist, die mechanische und/oder elektrische Funktionsfehler überprüft und gegebenenfalls meldet.

Der Unfallsensor 1 ist so ausgestaltet, daß er bei Erkennung eines Funktionsfehlers das Meldesignal nicht nur möglichst rasch generiert, sondern auch dauerhaft selbst dann erzeugt, wenn der erfaßte Fehler nur vorübergehender Natur ist und zum Beispiel nur kurzfristig aufgetreten ist. Dies kann dadurch erreicht werden, daß der Unfallsensor mit einem Flipflop oder einer funktionsähnlichen Komponente ausgestattet wird, dessen Setzeingang bei Erfassung eines internen Fehlers aktiviert wird, so daß das Flipflop-Ausgangs-signal seinen Pegel dauerhaft wechselt. Dieses Ausgangssignal wird an dem für die Meldesignalabgabe vorgesehenen Sensoranschluß ausgegeben.

Selbst spontan und nur vorübergehend auftretende Fehler führen somit zur dauerhaften Abgabe des den internen Funktionsfehler anzeigenden Meldesignals.

Bei dem in den Zeichnungen gezeigten Ausführungsbeispiel wird nach Abschluß der Selbsttest-Startphase (Zeitbereich links von der in Fig. 2 strichliert gezeigten vertikalen Linie) auf den Betriebsmodus (Zeitbereich rechts von dieser vertikalen Linie) umgeschaltet, bei dem der mit der Leitung 3 verbundene Anschluß der Steuereinrichtung 4 nun als Eingangsanschluß geschaltet wird und somit ein vom Unfallsensor 1 über die Leitung 3 erzeugtes Meldesignal aufnehmen kann.

Wie aus Fig. 2b) ersichtlich ist, fragt die Steuereinrichtung ihren mit der Leitung 2 verbundenen Eingangsanschlüß zyklisch mit hoher Frequenz von zum Beispiel 4 kHz ab, wie dies durch die symbolisch dargestellten, auch schon in der Startphase generierten Abfrageimpulse 6 veranschaulicht ist. Demgegenüber wird, wie in Fig. 2d) gezeigt ist, der mit der Leitung 3 verbundene Anschluß der Steuereinrichtung 4 erst ab der Umschaltung auf den Betriebsmodus sowie mit einer deutlich geringeren Frequenz von zum Beispiel 2,5 Hz, das heißt alle 400 ms, regelmäßig abgefragt. Die Abfrageimpulse für das Meldesignal sind in Fig. 2d) mit dem Bezugszeichen 9 bezeichnet.

In Fig. 2c) ist das auf der Leitung 3 auftretende Signal dargestellt. Während der Startphase wird, wie ausgeführt, von der Steuereinrichtung 4 der Selbsttest-Impuls 7 generiert.

Sobald der Unfallsensor 1 während der Betriebsphase einen internen Funktionsfehler detektiert, schaltet er als Meldesignal den bislang niedrigen Pegel der Leitung 3 dauerhaft auf hohen Pegel um, wie dies durch den Signalabschnitt 8 veranschaulicht ist. Sobald die Steuereinrichtung 4 diesen hohen Pegel des Meldesignals 8 beim nächsten Abfrageimpuls 9 ermittelt, reagiert die Steuereinrichtung 4 durch Abschalten der Zündbereitschaft, so daß nachfolgende keine Auslösung des Insassenschutzsystems mehr gesteuert werden kann. Der Zündbereitschaftszustand ist in Fig. 2e) mit dem Kurvenzug 10 veranschaulicht. Die Zündbereitschaft beginnt mit dem Start der Betriebsphase und wird auf die Erfassung der Anstiegsflanke des Meldesignals 8 hin wieder beendet. Zugleich kann auch eine im Fahrerbereich des Kraftfahrzeugs sichtbar angebrachte Warnlampe durch die Steuereinrichtung 4 (Airbag-Steuergerät) dauerhaft zum Leuchten gebracht werden. Alternativ oder zusätzlich kann auch ein akustischer Alarm, der die fehlende Zündbereitschaft des Insassenschutzsystems anzeigt, generiert werden.

Solange die Zündbereitschaft vorhanden ist, bewertet die Steuereinrichtung 4 das vom Unfallsensor 1 über die Leitung 2 zugeführte Sensor-Ausgangssignal gemäß dem intern vorgegebenen Auslösealgorithmus. Wenn das auf der Leitung 2 zugeführte Signal einen Unfall signalisiert, führt die Steuereinrichtung 4 die in Fig. 3 dargestellte Zündroutine durch. Bei einem Schritt S1 wird zunächst das auf der Leitung 3 anstehende Signal von der Steuereinrichtung 4 abgefragt, das heißt die Steuereinrichtung 4 überprüft vor der Zündung nochmals unabhängig von der durch die Abtastimpulse 9 vorgegebenen Zeitfolge, ob der Unfallsensor 1 tatsächlich seinen "ok"-Status signalisiert (niedriger Ausgangspegel am Testanschluß des Unfallsensors 1). Wenn die Überprüfung im Schritt S1 ergibt, daß der Unfallsensor 1 keinen Fehler meldet, wird zum Schritt S2 übergegangen, bei dem der oder die Zündschalter geschlossen und damit die Zündpille(n) des Insassenschutzsystems aktiviert werden. Wenn sich aber beim Schritt S1 ergeben sollte, daß der Unfallsensor 1 nun einen Fehler meldet, wird zum Schritt S3 übergegangen, bei dem keine Zündung ausgelöst wird, sondern stattdessen die Zündbereitschaft des Steuergeräts abgeschaltet und die Warnlampe getriggert wird. In diesem Fall wird davon ausgegangen, daß das vom Unfallsensor 1 auf der Leitung 2 abgegebene Ausgangssignal lediglich durch einen internen Sensorfehler, zum Beispiel durch ein fehlerhaft aus dem internen Speicher (EPROM) ausgelesenes Bit, verursacht wurde.

Im Anschluß an den Schritt S2 oder S3 wird die Zündroutine beendet und zum unterbrochenen Hauptprogramm zurückgekehrt.

Durch die in Fig. 3 gezeigte Vorgehensweise lassen sich ungewollte Zündungen des Insassenschutzsystems verhindern.

## Patentansprüche

1. Insassenschutzsystem für ein Kraftfahrzeug, mit einem Unfallsensor (1), insbesondere einem Beschleunigungssensor, zur Erfassung eines einen Unfall signalisierenden Betriebsparameters, insbesondere einer Kraftfahrzeugbeschleunigung, und einer mit dem Unfallsensor (1) über einen Sensor-Ausgangssignalanschluß verbundenen Steuereinrichtung (4), die die Auslösung des Insassenschutzsystems in Abhängigkeit vom Sensor-Ausgangssignal steuert, **dadurch gekennzeichnet, daß** der Unfallsensor (1) mit einer internen Fehlerüberprüfungsfunktion ausgestattet ist und bei Erfassung eines internen Fehlers dauerhaft ein Meldesignal an die Steuereinrichtung (4) abgibt, und daß der Unfallsensor (1) zusätzlich zum Sensor-Ausgangssignalanschluß einen Meldesignal-Ausgangsanschluß aufweist, über den das Meldesignal ausgegeben wird und der über eine Leitung mit einem Eingangsanschluß der Steuereinrichtung (4) verbunden ist.

2. Insassenschutzsystem nach Anspruch 1, **dadurch gekennzeichnet, daß** der Unfallsensor (1) einen mit der Steuereinrichtung (4) verbundenen Testanschluß aufweist.

3. Insassenschutzsystem nach Anspruch 1 oder 2, **dadurch gekennzeichnet, daß** die Steuereinrichtung (4) einen Eingabe/Ausgabeanschluß aufweist, über den sie während einer Testphase ein Testsignal an den Unfallsensor (1) abgibt.

4. Insassenschutzsystem nach einem der vorhergehenden Ansprüche, **dadurch gekennzeichnet, daß** die Steuereinrichtung (4) das Meldesignal periodisch abfragt.

5. Insassenschutzsystem nach einem der vorhergehenden Ansprüche, **dadurch gekennzeichnet, daß** die Steuereinrichtung (4) das Meldesignal mit einer niedrigeren Frequenz als das vom Unfallsensor (1) erzeugte Sensor-Ausgangssignal abfragt.

6. Insassenschutzsystem nach einem der vorhergehenden Ansprüche, **dadurch gekennzeichnet, daß** der Unfallsensor (1) einen Speicher zum Speichern von Sensorbetriebs-Steuerdaten enthält und beim Auslesen der Sensorbetriebs-Steuerdaten eine Fehlererkennungsüberprüfung durchführt sowie bei Erkennung eines Fehlers das Meldesignal generiert.

7. Insassenschutzsystem nach Anspruch 6, **dadurch gekennzeichnet, daß** der Unfallsensor (1) eine Paritätsüberprüfung beim Auslesen der Sensorbetriebs-Steuerdaten durchführt.

8. Verfahren zum Steuern der Auslösung eines Insassenschutzsystems gemäß einem der vorhergehenden Ansprüche, bei dem der Unfallsensor (1) in regelmäßigen oder unregelmäßigen Intervallen eine interne Fehlerüberprüfung ausführt und bei einer Fehlererkennung ein Meldesignal über den Meldesignal-Ausgangsanschluß an die Steuereinrichtung (4) abgibt, und die Steuereinrichtung (4) dann, wenn sie vom Unfallsensor (1) ein die Auslösekriterien zum Auslösen des Insassenschutzsystems erfüllendes Sensor-Ausgangssignal empfängt, vor einer Auslösung des Insassenschutzsystems den Zustand des Meldesignals überprüft und die Auslösung in Abhängigkeit vom überprüfungsergebnis freigibt oder sperrt.

9. Verfahren nach Anspruch 8, **dadurch gekennzeichnet, daß** die Steuereinrichtung (4) bei Empfang des Meldesignals eine zukünftige Auslösung des Insassenschutzsystems sperrt und/oder einen optischen und/oder akustischen Warnhinweis erzeugt.

## Claims

1. Vehicle occupant protection system for a motor vehicle, having an accident sensor (1), in particular an acceleration sensor, for registering an operating parameter which signals an accident, in particular a motor vehicle acceleration, and a control device (4) which is connected to the accident sensor (1) via a sensor output signal terminal and which controls the triggering of the vehicle occupant protection system as a function of the sensor output signal, **characterized in that** the accident sensor (1) is equipped with an internal error-checking function, and when an internal error is registered it permanently outputs a status signal to the control device (4), and **in that** the accident sensor (1) has, in addition to the sensor output signal terminal, a status signal output terminal via which the status signal is output and which is connected to an input terminal of the control device (4) via a line.

2. Vehicle occupant protection system according to Claim 1, **characterized in that** the accident sensor (1) has a test terminal which is connected to the control device (4).

3. Vehicle occupant protection system according to Claim 1 or 2, **characterized in that** the control device (4) has an input/output terminal via which it outputs a test signal to the accident sensor (1) during a test phase.

4. Vehicle occupant protection system according to one of the preceding claims, **characterized in that** the control device (4) periodically interrogates the status signal.

5. Vehicle occupant protection system according to one of the preceding claims, **characterized in that** the control device (4) interrogates the status signal with a lower frequency than the sensor output signal generated by the accident sensor (1).

6. Vehicle occupant protection system according to one of the preceding claims, **characterized in that** the accident sensor (1) contains a memory for storing sensor operating control data, and when the sensor operating control data are read out it carries out an error detection check and when an error is detected it generates the status signal.

7. Vehicle occupant protection system according to Claim 6, **characterized in that** the accident sensor (1) carries out a parity check when the sensor operating control data are read out.

8. Method for controlling the triggering of a vehicle occupant protection system in accordance with one of the preceding claims, in which the accident sensor (1) carries out an internal error check at regular or irregular intervals, and when there is an error detection it outputs a status signal to the control device (4) via the status signal output terminal, and when the control device (4) receives from the accident sensor (1) a sensor output signal which fulfils the triggering criteria for triggering the vehicle occupant protection system, it checks the status of the status signal before triggering of the vehicle occupant protection system, and it enables or disables the triggering as a function of the result of the check.

9. Method according to Claim 8, **characterized in that** when the status signal is received, the control device (4) disables future triggering of the vehicle occupant protection system and/or generates a visual and/or audible warning.

## Revendications

1. Système de protection des occupants d'un véhicule, comportant un détecteur (1) d'accident, en particulier un détecteur d'accélération, pour l'enregistrement d'un paramètre de fonctionnement signalant un accident, en particulier une accélération d'un véhicule, et un dispositif (4) de commande relié au détecteur (1) d'accident par une connexion du signal de sortie du détecteur, qui commande le déclenchement du système de protection des occupants en fonction du signal de sortie du détecteur, **caractérisé en ce que** le détecteur (1) d'accident est équipé d'une fonction de contrôle de défaillance interne et délivre de façon durable un signal d'état au dispositif (4) de commande au cas où il enregistre une défaillance interne, et **en ce que** le détecteur (1) d'accident présente en plus de la connexion du signal de sortie du détecteur une connexion de la sortie du signal d'état, sur laquelle le signal d'état est délivré et qui est reliée par une ligne à une connexion d'entrée du dispositif (4) de commande.

2. Système de protection des occupants selon la revendication 1, **caractérisé en ce que** le détecteur (1) d'accident présente une connexion de test reliée au dispositif (4) de commande.

3. Système de protection des occupants selon les revendications 1 ou 2, **caractérisé en ce que** le dispositif (4) de commande présente une connexion d'entrée/sortie, sur laquelle il délivre un signal de test au détecteur (1) d'accident pendant une phase de test.

4. Système de protection des occupants selon l'une des revendications précédentes, **caractérisé en ce que** le dispositif (4) de commande interroge périodiquement le signal d'état.

5. Système de protection des occupants selon l'une des revendications précédentes, **caractérisé en ce que** le dispositif (4) de commande interroge le signal d'état à une fréquence plus faible que celle du signal de sortie du détecteur généré par le détecteur (1) d'accident.

6. Système de protection des occupants selon l'une des revendications précédentes, **caractérisé en ce que** le détecteur (1) d'accident contient une mémoire pour mémoriser les données de commande du fonctionnement du détecteur, réalise un contrôle de reconnaissance de défaillance lors de l'extraction des données de commande du fonctionnement du détecteur et génère le signal d'état au cas où il reconnaît une défaillance.

7. Système de protection des occupants selon la revendication 6, **caractérisé en ce que** le détecteur (1) d'accident réalise un contrôle de la parité lors de l'extraction des données de commande du fonctionnement du détecteur.

8. Procédé de commande du déclenchement d'un système de protection des occupants conforme à l'une des revendications précédentes, pour lequel le détecteur (1) d'accident exécute un contrôle de défaillance interne à intervalles de temps réguliers ou irréguliers et délivre un signal d'état sur la connexion de sortie du signal d'état au dispositif (4) de commande au cas où il reconnaît une défaillance, et pour lequel le dispositif (4) de commande contrôle alors l'état du signal d'état avant un déclenchement du système de protection des occupants et valide ou bloque le déclenchement en fonction du résultat du contrôle, s'il reçoit du détecteur (1) d'accident un signal de sortie du détecteur remplissant un des critères de déclenchement du système de protection des occupants.

9. Procédé selon la revendication 8, **caractérisé en ce que** le dispositif (4) de commande bloque un déclenchement futur du système de protection des occupants au cas où il reçoit le signal d'état et/ou génère une indication d'avertissement optique et/ou acoustique.
